(19) Europäisches Patentamt
European Patent Office
Office européen des brevets

(11) **EP 4 317 394 A1**

(12) **EUROPEAN PATENT APPLICATION**
published in accordance with Art. 153(4) EPC

(43) Date of publication:
07.02.2024 Bulletin 2024/06

(21) Application number: 22780323.6

(22) Date of filing: 22.03.2022

(51) International Patent Classification (IPC):
*C12C 11/11* (2019.01)      *C12C 12/04* (2006.01)
*C12H 3/00* (2019.01)      *A23L 2/00* (2006.01)
*A23L 2/38* (2021.01)

(52) Cooperative Patent Classification (CPC):
A23L 2/00; A23L 2/38; C12C 11/11; C12C 12/04;
C12H 3/00

(86) International application number:
PCT/JP2022/013206

(87) International publication number:
WO 2022/210108 (06.10.2022 Gazette 2022/40)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 02.04.2021 JP 2021063592

(71) Applicant: Asahi Group Holdings, Ltd.
Tokyo 130-8602 (JP)

(72) Inventors:
• NAKAYAMA, Wataru
Moriya-shi, Ibaraki 302-0106 (JP)
• MATSUSHIMA, Takemasa
Moriya-shi, Ibaraki 302-0106 (JP)
• NAKAKAWAJI, Shingo
Moriya-shi, Ibaraki 302-0106 (JP)

(74) Representative: Müller-Boré & Partner
Patentanwälte PartG mbB
Friedenheimer Brücke 21
80639 München (DE)

(54) **NON-ALCOHOLIC BEER-TASTE BEVERAGE**

(57) An object of the invention is to provide a non-alcohol beer-taste beverage excellent in robust feeling of drinking and also excellent in foam quality. The means for solving the problems is a non-alcohol beer-taste beverage containing a wort fermented liquid, having a malt use ratio of 50% or more, a real extract concentration of 6 w/v% or more, and a ratio of bitterness value (BU) to real extract concentration (w/v%) (bitterness value/real extract) of 2.0 to 3.8.

EP 4 317 394 A1

**Description**

Technical Field

The present invention relates to a non-alcohol beer-taste beverage, and particularly to a non-alcohol beer-taste fermented malt beverage. As used herein, the phrase "non-alcohol" means both containing alcohol in amounts less than 1 v/v%, and containing no alcohol. Also, the term "alcohol" means ethanol.

"Fermented malt beverage" means a beverage obtained through the process of using malt as a raw material and fermenting the same. "Beer taste" means a taste and aroma reminiscent of beer. "Beer" means a beverage obtained through the use of malt, hops, water and the like as raw materials, and fermenting these with yeast.

Background Art

It has been known a non-alcohol beer which is made by removing alcohol component from ordinary beer. When the alcohol component is removed from beer that is a fermented product, a beer-taste beverage is provided by leaving flavor components that have been produced during an alcoholic fermentation process.

Patent Document 1 describes a beer-taste beverage obtained by subjecting a beer after fermentation to an alcohol-removing treatment to remove alcohol component. It describes regarding such a non-alcohol beer-taste beverage, at paragraph 0003, that aroma and sweetness belonging to the alcohol component are removed by removing alcohol component, and as a result, points out the problems in terms of sensory aspect of shortage in beer-like aroma, weak in sweetness, and insufficient in richness and sharpness.

Patent Document 1 attempts to solve the problem by adding predetermined amounts of malt extract component and saccharides (claim 1). However, the malt extract component has an unpleasant odor, so-called wort flavor. Therefore, the non-alcohol beer-taste beverage prepared by including the malt extract component therein is inferior in palatability because an unpleasant odor is imparted along with the beer-taste flavor.

Patent Document 2 discloses an effervescent beverage having a real extract concentration of 4.50 w/v% or more, and a carbon dioxide gas pressure of 205 kPa or more at 20°C (Claim 8). This effervescent beverage uses a raw material liquid prepared by allowing $\alpha$-glucosidase to act on a polysaccharide to increase the carbon dioxide gas pressure, thereby enhancing the drinkability. This effervescent beverage may be an alcohol-fermented raw material liquid, or may be an effervescent non-alcohol beverage obtained by subjecting a raw material liquid to a treatment to reduce the alcohol content after alcohol fermentation.

However, the effervescent beverage of Patent Document 2 actually has a high alcohol content of 4.89 to 6.46% by volume (Examples 1 and 2, Fig. 1). Therefore, the aroma and feeling of stimulation of the alcohol component contribute to the senses thereof.

Patent Document 3 discloses a low-alcohol beer-taste beverage, characterized in that the extracted component of the final product is 1.0 w/v% or more and 10.0 w/v% or less, that the real degree of fermentation is 30% or more and 70% or less, and that the bitterness value (BU) to the extracted component (w/v%) in the final product is 1.4 or more to 4.9 or less (claim 5). This low-alcohol beer-taste beverage has an excellent flavor, and enhanced drinkability, while having a sufficient rich taste.

However, the low-alcohol beer-taste beverage of Patent Document 3 has a relatively high alcohol concentration of 3.2 to 3.4% by volume (Examples 1 to 3, Figs. 1 to 3) . Therefore, the aroma and feeling of stimulation of the alcohol component contribute to the senses thereof.

Prior Art Document

Patent Document

Patent Document 1: JP 2003-250503 A
Patent Document 2: JP 2019-110831 A
Patent Document 3: JP 2015-133924 A

Summary of Invention

Problems to be solved by Invention

In respect of a non-alcohol beer-taste beverage obtained by subjecting a beer after fermentation to an alcohol-removing treatment to remove the alcohol component, since it contains no alcohol, the robust feeling of drinking is inferior.

Further, beer-taste beverages are expected to form fine foam when poured into a glass or the like, and to keep the bubbles on the liquid surface for a long time. In order to improve the foam quality of beer-taste beverages, a foaming component is generally used as an additive. However, the foaming component has a flavor by itself and may adversely affect the flavor of beer-taste beverages. Therefore, it is preferable to improve the foam quality of beer-taste beverages without using a foaming component as an additive.

The present invention solves the above-mentioned problems, and an object of the present invention is to provide a non-alcohol beer-taste beverage excellent in robust feeling of drinking and also excellent in foam quality. The foam quality means the fineness, uniformity, and degree of retention properties of the foam.

Means for solving Problems

The present invention provides a non-alcohol beer-taste beverage containing a wort fermented liquid, having a malt use ratio of 50 w/w% or more, a real extract concentration of 6 w/v% or more, and a ratio of bitterness value (BU) to real extract concentration (w/v%) (bitterness value/real extract) of 2.0 to 3.8.

In one embodiment, the apparent final degree of fermentation of the wort fermented liquid is 80% or less.

In one embodiment, the non-alcohol beer-taste beverage contains an alcohol-removed wort fermented liquid.

In one embodiment, the non-alcohol beer-taste beverage has a chromaticity of 15° EBC or less.

In one embodiment, the non-alcohol beer-taste beverage has a NIBEM value of 240 seconds or more.

In one embodiment, the non-alcohol beer-taste beverage does not containing soybean-derived dietary fiber or soybean-derived protein.

Also, the present invention provides a method for producing a non-alcohol beer-taste beverage containing a real extract concentration of 6 w/v% or more, and a ratio of bitterness value (BU) to real extract concentration (w/v%) (bitterness value/real extract) of 2.0 to 3.8, comprising:

a step of yeast fermenting wort having a malt use ratio of 50% or more to obtain a wort fermented liquid; and
a step of removing alcohol from the fermented wort liquid to reduce the alcohol concentration to less than 1 v/v%.

In one embodiment, the wort is a trans-glucosidase-treated wort.

Effects of Invention

According to the present invention, a non-alcohol beer-taste beverage excellent in robust feeling of drinking and also excellent in foam quality is provided. The foam of the non-alcohol beer-taste beverage of the present invention is fine and uniform, and provides a mild taste and a creamy flavor. In addition, the foam of the non-alcohol beer-taste beverage of the present invention has excellent retention properties, and a mild taste and a creamy flavor last for a long time. As used herein, the term "mild taste" means a mellow taste with less stimulation, which is felt in the mouth. Further, the term "creamy flavor" means a flavor and a mouthfeel reminiscent of cream.

Description of Embodiments

The non-alcohol beer-taste beverage of the present invention may be produced through the process of using malt as a raw material, and saccharifying maische containing the malt. The type of malt used is preferably pale malt from the viewpoint of improving the sharp feeling. When dark malt is used, the sweetness of the obtained non-alcohol beer-taste beverage is increased, and the sharp feeling is likely to be reduced. Therefore, it is preferred to use only pale malt as the malt. Transglucosidase is added to the malt-containing maische, if necessary.

The transglucosidase used in the present invention is not particularly limited as long as it is an enzyme having catalytic activity for a glycosyl transfer reaction, and transglucosidases derived from various organisms may be used. For example, any enzyme of the commercially available transglucosidases may be used, or these may be used in combination.

The addition of transglucosidase to maische is not particularly limited as long as a timing when the enzymatic reaction, with the transglucosidase added within the preparation step, is sufficiently carried out. For example, transglucosidase may be added together with a fermentation raw material such as malt when the maische is prepared, or may be added in the way of the saccharifying reaction. In the present invention, in order to sufficiently proceed the enzymatic reaction with transglucosidase, it is preferred that the transglucosidase is added at the time of preparing the maische or at an early stage of the preparation step, and it is more preferred that it is added at the time of preparing the maische.

For example, by first, crushed malt, auxiliary raw materials such as barley, and warm water are placed into a preparation tank and mixed to prepare maische. The preparation of the maische may be performed by a conventional method. For example, first, by holding at 35 to 60°C for 20 to 90 minutes, proteins derived from raw materials are decomposed into amino acids and the like, and then, a saccharifying step is conducted. At this stage, as necessary, an enzyme such as transglucosidase, and flavor components such as spices and herbs, and the like may be added other than the main raw materials and the auxiliary raw materials.

Then, by gradually raising the temperature of the maische and holding it at a predetermined temperature for a certain period of time, starchy component is saccharified by utilizing an enzyme derived from malt and an enzyme added to the maische. The temperature and time during the saccharifying treatment may be appropriately determined in consideration of the type of enzyme used, the amount of maische, the quality of the intended wort fermented liquid, and the like, which may be carried out by holding it, for example, at 60 to 72°C for 30 to 90 minutes. After the saccharifying treatment, the maische is held at 76 to 78°C for about 10 minutes, and then filtered in a wort filtration tank to obtain a transparent saccharide liquid. Further, when performing the saccharifying treatment, an appropriate amount of the enzyme may be added within a necessary range.

The content of malt in the raw materials used for saccharification, that is, the malt use ratio is 50 w/w% or more, and preferably 67 w/w% or more. Further, the malt use ratio of the raw materials used for saccharification may be 100 w/w%. The ratio of malt to all raw materials except water (w/w%) is called the malt use ratio. When the malt usage ratio is 50w/w% or more, the non-alcohol beer-taste beverage of the present invention is provided with a refreshing flavor having a beer-like profound feeling.

In one embodiment, the malt use ratio is 68 to 95 w/w%, and preferably 69 to 90 w/w%.

The higher the malt use ratio, the stronger the malt-derived umami, rich feeling of the obtained wort. In addition, the higher the malt content in the raw materials, the higher the nitrogen compounds content in the obtained wort, and when the wort is subjected to fermentation, fermentation irregularities are less likely to occur, and an unpleasant odor is hardly generated.

Auxiliary raw materials mean raw materials other than malt and hops. Examples of the auxiliary raw materials are starchy raw materials such as barley, wheat, corn starch, corn grits, rice, and Kaoliang, and saccharide raw materials such as liquid sugar and sugar. Here, the liquid sugar is produced by decomposing and saccharifying starchy component with an acid or a saccharifying enzyme, and mainly contains glucose, maltose, maltotriose and the like. In addition, spices, herbs, fruits and the like used for the purpose of imparting or improving flavor are also included in the auxiliary raw materials.

The saccharifying enzyme means an enzyme for decomposing starchy component into saccharide. As the saccharifying enzyme, there are, for example, $\alpha$-amylase, glucoamylase, pullanase and the like.

Wort boiling operation may be carried out according to the method and conditions which are commonly carried out when producing beer. For example, a saccharide liquid, the pH of which has been adjusted, is transferred to a boiling kettle, and boiled. During the time from the start of boiling of the saccharide liquid until being left to stand, hops are added in a whirlpool. Hop extract component or a component extracted from hops may be used as the hops. The saccharide liquid is then transferred to a precipitation tank called a whirlpool. After hops lees and curdled protein, produced by boiling, are removed, the resulting liquid is cooled to an appropriate fermentation temperature by a plate cooler. Wort is obtained by operations up to the above wort boiling. Among worts, wort that used transglucosidase when saccharifying maische is called transglucosidase-treated wort.

Wort contains a wide variety of saccharides, ranging from monosaccharides to polysaccharides, including non-assimilable saccharides. Non-assimilable saccharides mean saccharides that yeast does not use as nutrient sources for alcoholic fermentation and the like. The beer yeast used in the present invention assimilates glucose, fructose, maltose, and maltotriose. Therefore, saccharides other than these are collectively referred to as non-assimilable saccharides. Specific examples of the non-assimilable saccharides contained in the transglucosidase-treated wort include isomaltose, isomaltotriose, panose, oligosaccharides having 4 or more saccharides, and non-assimilable polysaccharides. The non-assimilable saccharides remain even after undergoing a fermentation step and an alcohol removal step described below.

The amount of transglucosidase used in producing maische is appropriately adjusted so that the real extract concentration of the non-alcohol beer-taste beverage is within the above range in consideration of the type and reaction conditions. Generally, it is 7 g/kg or less, preferably 1 to 6 g/kg, and more preferably 3 to 5 g/kg based on the solid content of maische.

The obtained wort is fermented by yeast. Fermentation of wort may be carried out according to the conventional method. For example, beer yeast is inoculated into cooled wort, and transferred to a fermentation tank to carry out alcoholic fermentation.
The type of yeast used is preferably bottom-fermenting yeast from the viewpoint of improving the sharp feeling.

The apparent final degree of fermentation of the wort fermented liquid is preferably 80% or less. When the apparent final degree of fermentation of the wort fermented liquid exceeds 80%, the rich feeling of the obtained beer-taste beverage tends to be insufficient and the sourness tends to be strong. The apparent final degree of fermentation of the fermented wort liquid of the present invention is preferably 45 to 80%, and more preferably 50 to 75%.

In one preferred embodiment, the apparent final degree of fermentation is 75% or less, preferably 50 to 68%, and more preferably 51 to 63%.

The degree of fermentation is an important index which indicates to what extent fermentation has progressed in beer after fermentation, i.e., the progress of fermentation. Further, the final degree of fermentation means the ratio of the extract component that can be assimilated by beer yeast based on the raw wort extract component. Here, the extract component that can be assimilated by beer yeast is what is obtained by subtracting an extract component contained in the produced beer (that is, an extract component remaining after fermenting all the extract components that can be used by beer yeast (referred to as a final extract component) from the raw wort extract component. The apparent final degree of fermentation means the final degree of fermentation which is calculated by using, as the value of the final extract component, the apparent extract component, that is, the extract concentration (w/v%) derived from the specific gravity of alcohol-containing beer.

The extract component means the non-volatile solid component. The term extract component means the non-volatile solid component itself, the amount of the non-volatile solid component, or the concentration of the non-volatile solid component depending on the context.

The apparent final degree of fermentation Vend of the wort fermented liquid may be obtained by, for example, the following formula (1).

$$\text{Vend (\%)} = \{(P-\text{End})/P\} \times 100 \qquad (1)$$

wherein P is a raw wort extract component and Eend is an apparent final extract component.

The raw wort extract component P is the theoretical wort extract component value before alcoholic fermentation, which is back calculated from the alcohol concentration and the extract component value of the produced beer according to Balling's formula. Specifically, it may be obtained by the method shown in Analytica-EBC (9.4) (2007). In addition, the apparent final extract component Eend may be determined by collecting beer in a flask, adding a large amount of fresh pressed yeast, fermenting the mixture at 25°C while stirring until the extract component value does not decrease any more (24 hours), and measuring the apparent extract component value in the remaining beer.

The apparent final extract component Eend may show a negative value because it is calculated from the alcohol-containing specific density of the final extract component. As a result, the apparent final degree of fermentation may exceed 100%.

The apparent final degree of fermentation may be controlled by adjusting, for example, the saccharifying conditions, whether or not the enzyme is used when saccharifying the raw material, the type and blending amount of the raw material, and the like. For example, the apparent final degree of fermentation may be reduced by reducing the amount of assimilable saccharides contained in maische.

After completion of the fermentation, further, the obtained wort fermented liquid is matured as a maturing process in a liquor storage tank, stored under a low temperature condition of about 0°C, and stabilized. Next, as a filtration step, yeast, proteins and the like are removed by filtering the wort fermented liquid after maturation.

From the wort fermented liquid, from which yeast, protein and the like have been removed, carbon dioxide gas contained therein is removed as necessary. In addition, the wort fermented liquid is subjected to an alcohol-removing step to remove alcohol contained therein. The alcohol-removing step is carried out until the alcohol concentration of the wort fermented liquid is, for example, less than 1 v/v%, preferably less than 0.5 v/v%, and more preferably less than 0.1 v/v%. The alcohol-removing step is carried out using a conventionally known method. For example, a vacuum distillation method may be used. In this case, it is preferred to employ a method in which flavor components produced in the alcoholic fermentation process are allowed to remain therein.

A pH adjusting agent is added to the alcohol-removed wort fermented liquid to lower the pH as necessary. By sufficiently lowering the pH, bacteriostatic properties required for marketing the beverage is imparted, and the non-alcohol beer-taste beverage of the present invention is obtained. The non-alcohol beer-taste beverage of the present invention may have a low pH to such an extent that the spoilage prevention effect is obtained. The specific upper limit of the pH is less than 4.2, preferably less than 4.1, and more preferably less than 4.0. On the other hand, the specific lower limit of the pH is 3.0 or more, preferably 3.3 or more, and more preferably 3.6 or more.

The types of pH adjusting agents are not limited. Acids, which are food additives and which may be used for beverages, foods or production process thereof, salts thereof, and beer raw materials having pH lowering ability may be used as the pH adjusting agents. Examples of the beer raw materials having pH lowering ability include sour malt, dark malt and the like. Preferred pH adjusting agents are phytic acid, citric acid, lactic acid, lactic acid bacteria, phosphoric acid, malic acid, sulfurous anhydride, tartaric acid, gluconic acid, acetic acid, succinic acid, adipic acid, itaconic acid, fumaric acid and combinations thereof. More preferred pH adjustors are phytic acid, lactic acid, lactic acid bacteria, phosphoric acid, malic acid, sulfurous anhydride, tartaric acid and combinations thereof. Considering the effect on the flavor of beer-taste beverages, phytic acid, which has less sourness among these, is most preferred.

A bitter substance is added to the alcohol-removed wort fermented liquid as necessary to adjust the bitterness value. Isolated iso-$\alpha$, acids may be used as the bitter substance. The iso-$\alpha$ acids are contained in hops, and it may also be employed as hops or a hop extract component. The hops or hop extract component means hop leaves, a ground product thereof, an extraction liquid obtained by extracting these with water or boiling water, a concentrate and a dried product of the extraction liquid.

The bitterness value of non-alcohol beer-taste beverages is adjusted to, for example, 5 to 50 BU, preferably 15 to 35 BU, and more preferably 20 to 30 BU so as to have a bitterness equivalent to beer. The bitterness value of non-alcohol beer-taste beverages may be measured by the method described in BCOJ Beer Analysis Method, edited by the Beer Brewery Association, 8.15 (2004).

Carbon dioxide gas is added to the alcohol-removed wort fermented liquid by a carbonation step. That results in obtaining the non-alcohol beer-taste beverage of the present invention. The amount of carbon dioxide gas added is adjusted so that it has the same foaming properties as beer. Specifically, the amount of carbon dioxide added is adjusted so that the gas pressure at 4°C after addition is 0.15 to 0.35 MPa, preferably 0.18 to 0.30 MPa, and more preferably 0.21 to 0.25 MPa.

The non-alcohol beer taste beverage of the present invention has an alcohol concentration of less than 1 v/v%. If the alcohol concentration of the non-alcohol beer-taste beverage is 1 v/v% or more, it is easy to get drunk, which is not preferred. When it is produced by subjecting the wort fermented liquid to alcohol removal, it is difficult to reduce the alcohol concentration of the non-alcohol beer-taste beverage to 0 v/v%. The alcohol concentration of the non-alcohol beer-taste beverage is preferably 0.8 v/v% or less, for example, 0.1 to 0.8 v/v%, and preferably 0.2 to 0.6 v/v%.

The non-alcohol beer-taste beverage preferably has a real extract concentration of 6 w/v% or more. If the real extract concentration is less than 6 w/v%, the rich feeling of the non-alcohol beer-taste beverage may become insufficient. Further, the foam fineness, uniformity, and retention properties of the non-alcohol beer-taste beverage may also become insufficient. The real extract concentration of the non-alcohol beer-taste beverage is preferably 7 to 10 w/v%, and more preferably 8 to 9 w/v%.

In a preferred embodiment, the real extract concentration is 6.5 to 9.5 w/v%, and preferably 7.5 to 8.9 w/v%.

The foam quality of non-alcohol beer-taste beverages affects the flavor. If the fineness or uniformity of the foam is insufficient, the mild taste or creamy flavor of non-alcohol beer-taste beverages becomes insufficient. If the foam retention properties are insufficient, the retention properties of the mild taste or creamy flavor become insufficient.

The real extract concentration means the concentration of the non-volatile solid component. The real extract concentration of non-alcohol beer-taste beverages may be measured by the EBC method (BCOJ Beer Analysis Method, 7.2 (2004), edited by the Beer Brewery Association).

The non-alcohol beer-taste beverage of the present invention has a foam retention NIBEM value of 240 seconds or more from the viewpoint of improving the foam quality. The foam retention NIBEM value of the non-alcohol beer-taste beverage is preferably 260 seconds or more, and more preferably 270 to 310 seconds. Substantially, the upper limit of the foam retention NIBEM value of the non-alcohol beer-taste beverage is about 380 seconds.

The NIBEM value of beer-taste beverages can be measured by the method described in Beer Brewery Association, Edited by BCOJ Beer Analysis Method, 8.29 (2004).

Non-alcohol beer-taste beverages do not have a feeling of stimulation caused by alcohol. Therefore, in particular, when the real extract concentration is increased, the sweetness of the obtained non-alcohol beer-taste beverage is enhanced, and the sharp feeling is likely to be reduced. The non-alcohol beer-taste beverage of the present invention has a ratio of the bitterness value (BU) to the real extract concentration (w/v%) (bitterness value/real extract) of 2.0 to 3.9 from the viewpoint of improving the sharp feeling. The bitterness value/real extract value is preferably 2.2 to 3.7, and more preferably 2.4 to 3.5.

In a preferred embodiment, the bitterness value/real extract value is preferably 2.5 to 3.9, and more preferably 2.6 to 3.8.

When the non-alcohol beer-taste beverage of the present invention uses only pale malt as malt, and does not use dark malt, the chromaticity becomes 15° EBC or less. The chromaticity of the non-alcohol beer-taste beverage is preferably 12° EBC or less, and more preferably 3 to 11° EBC.

Various additives commonly used in the field of beer-taste beverages, such as sweeteners, sour agents, vitamins, amino acids, water-soluble dietary fibers, flavors, stabilizers, emulsifiers and antifoaming agents, may further be used in the non-alcohol beer-taste beverage of the present invention as required. However, it is preferred that these additives do not affect the flavor and appearance of the non-alcohol beer-taste beverage.

Among the additives, foaming components generally have a flavor by themselves and affect the beer-like flavor of beer-taste beverages, and therefore it is preferable not to use them. For example, soybean-derived dietary fiber or soybean-derived protein, which is usually used as a foaming component of beer-taste beverages, may suppress the sharp feeling, and therefore it is preferable not to use it as an additive.

The present invention will be more specifically described by the following examples, but the present invention is not limited to these. In the examples, the units of concentration and content are based on weight unless otherwise specified.

Examples

[Production of Non-Alcohol Beer-Taste Beverage] Crushed malt, corn starch, warm water, and transglucosidase ("Transglucosidase L" manufactured by Amano Co., Ltd.) as an enzyme were placed into a preparation kettle, and protein was decomposed at around 55°C. Then the liquid was transferred from the preparation kettle to a preparation tank, and saccharifying was performed at a temperature in the range of 60 to 76°C. This saccharified liquid was filtered with a lauter that was a filter tank, then transferred to a boiling kettle, hops were added, and boiled for 60 minutes. After boiling, warm water equivalent to the evaporated component was added, hot trub was removed in a whirlpool tank, followed by cooling to 10°C using a plate cooler to obtain wort.

Beer yeast was added to this wort to conduct fermentation at around 10°C for 7 days, after which the beer yeast was removed. The tank was changed, the resulting wort was matured for 7 days, then cooled to around -1°C and stabilized for 14 days. Then, gas-removed water was added to dilute the raw wort extract component to 10 w/v%, followed by filtration using diatomaceous earth to obtain a wort fermented liquid.

The apparent final degree of fermentation of the obtained wort fermented liquid was measured according to a conventional method.

Next, the obtained wort fermented liquid was sprayed into a gas-removing tank under a reduced pressure of about 90 mbar to remove carbon dioxide, followed by heating to about 50°C using a plate cooler. Thereafter, it was brought into contact with water vapor heated to around 50°C in a column at a reduced pressure of around 90 mbar to adsorb volatile components to the water vapor so that alcohol and volatile components are removed, thereby obtaining an alcohol-removed wort fermented liquid.

Carbon dioxide gas was dissolved in the obtained alcohol-removed wort fermented liquid to obtain a non-alcohol beer-taste beverage.

The real extract concentration of non-alcohol beer-taste beverages (w/v%) was measured by the EBC method. The alcohol concentration, chromaticity (EBC), pH, gas pressure (MPa), bitterness value (BU) and NIBEM value (seconds) of the non-alcohol beer-taste beverage were measured according to conventional methods.

[Sensory Evaluation Method]

Sensory evaluation was performed on non-alcohol beer-taste beverages. As evaluation items, sharp feeling, rich feeling and beer-like flavor were set. Ten trained panelists specialized in beer scored them according to the criteria described below. The average score of all the panelists was used as the score for each evaluation item. The liquid temperature of the sample used for evaluation was around 4°C.

[Evaluation Items and Evaluation Criteria]

Mild taste intensity:

The intensity of mellow taste with less stimulation, which is felt in the mouth, was evaluated as "mild taste intensity". Scoring was conducted on a 5-levels scale in which control plot 1 was given 3 points, and the score of the most intense experimental plot was given 5 points.

Creamy flavor intensity:

The intensities of flavor and mouthfeel reminiscent of cream were evaluated as "creamy flavor intensity". Scoring was conducted on a 5-levels scale in which control plot 1 was given 3 points, and the score of the most intense experimental plot was given 5 points.

Intensity of robust feeling of drinking:

Regarding the "intensity of robust feeling of drinking", scoring was conducted on a 5-levels scale in which control plot 1 was given 3 points, and the most intense experimental plot was given 5 points.

The characteristics and performance of the produced non-alcohol beer-taste beverages are shown below.

[Table 1]

| | | Experimental plot | | | | | |
|---|---|---|---|---|---|---|---|
| | | 1 | 2 | 3 | 4 | 5 | 6 |
| Analytical value of beverage sample, etc. | Malt use ratio (w/w%) | 70 | 70 | 70 | 80 | 80 | 70 |
| | Apparent final degree of fermentation (%) | 61.2 | 56.0 | 59.8 | 56.9 | 51.0 | 55.2 |
| | Alcohol concentration (v/v%) | 0.56 | 0.46 | 0.45 | 0.47 | 0.50 | 0.47 |
| | Real extract (w/v%) | 7.57 | 8.22 | 7.76 | 8.12 | 8.84 | 8.37 |
| | Apparent extract (w/v%) | 7.36 | 8.06 | 7.60 | 7.95 | 8.67 | 8.22 |
| | Chromaticity (° EBC) | 6.9 | 6.4 | 7.1 | 10.5 | 9.1 | 8.7 |
| | pH | 4.06 | 4.25 | 4.32 | 4.43 | 4.31 | 4.23 |
| | Gas pressure (MPa) | 0.24 | 0.23 | 0.23 | 0.24 | 0.23 | 0.23 |
| | Bitterness value (BU) | 28.5 | 22.5 | 24.5 | 26.5 | 25.0 | 22.0 |
| | Bitterness value /Real extract value | 3.76 | 2.74 | 3.16 | 3.26 | 2.83 | 2.63 |
| | NIBEM value (seconds) | 274 | 292 | 282 | 284 | 305 | 278 |
| Sensory evaluation | Mild taste intensity | 3.8 | 4.0 | 4.0 | 4.0 | 4.2 | 3.8 |
| | Creamy flavor intensity | 3.8 | 4.0 | 4.0 | 4.2 | 4.0 | 4.0 |
| | Intensity of robust feeling of drinking | 3.6 | 4.2 | 4.0 | 4.0 | 4.2 | 3.8 |

[Table 2]

| | | Control plot | | | | |
|---|---|---|---|---|---|---|
| | | 1 | 2 | 3 | 4 | 5 |
| Analytical value of beverage sample, etc. | Malt use ratio (w/w%) | 100 | 70 | 70 | 70 | 70 |
| | Apparent final degree of fermentation (%) | 92.0 | 76.2 | 77.1 | 77.1 | 76.0 |
| | Alcohol concentration (v/v%) | 0.74 | 0.53 | 0.50 | 0.48 | 0.48 |
| | Real extract (w/v%) | 3.82 | 5.74 | 5.63 | 5.63 | 5.78 |
| | Apparent extract (w/v%) | 3.55 | 5.55 | 5.45 | 5.46 | 5.60 |
| | Chromaticity (° EBC) | 11.1 | 8.4 | 6.9 | 7.1 | 7.4 |
| | pH | 4.19 | 4.03 | 4.04 | 4.08 | 4.12 |
| | Gas pressure (MPa) | 0.26 | 0.23 | 0.25 | 0.26 | 0.27 |
| | Bitterness value (BU) | 26.0 | 23.5 | 25.0 | 22.5 | 24.0 |
| | Bitterness value /Real extract value | 6.81 | 4.09 | 4.44 | 4.00 | 4.15 |
| | NIBEM value (seconds) | 239 | 253 | 260 | 244 | 255 |
| Sensory evaluation | Mild taste intensity | 3.0 | 3.4 | 3.2 | 3.0 | 3.2 |
| | Creamy flavor intensity | 3.0 | 3.4 | 3.2 | 3.0 | 3.2 |
| | Intensity of robust feeling of drinking | 3.0 | 3.4 | 3.2 | 3.0 | 3.2 |

The non-alcohol beer-taste beverages in experimental plots satisfied the constituent requirements of the present invention, had high ratings for their mild taste, creamy flavor, and robust feeling of drinking, and were also excellent in foam retention properties. On the other hand, the non-alcohol beer-taste beverages in control plots were low in real extract concentration, high in bitterness value/real extract value, had low ratings for their mild taste, creamy flavor, and robust feeling of drinking, and were also inferior in foam retention properties.

## Claims

1.  A non-alcohol beer-taste beverage containing a wort fermented liquid, having a malt use ratio of 50 w/w% or more, a real extract concentration of 6 w/v% or more, and a ratio of bitterness value (BU) to real extract concentration (w/v%) (bitterness value/real extract) of 2.0 to 3.8.

2.  The non-alcohol beer-taste beverage according to claim 1, wherein the apparent final degree of fermentation of the wort fermented liquid is 80% or less.

3.  The non-alcohol beer-taste beverage according to claim 1 or 2, containing an alcohol-removed wort fermented liquid.

4.  The non-alcohol beer-taste beverage according to any one of claims 1 to 3, having a chromaticity of 15° EBC or less.

5.  The non-alcohol beer-taste beverage according to any one of claims 1 to 4, having a NIBEM value of 240 seconds or more.

6.  The non-alcohol beer-taste beverage according to any one of claims 1 to 5, not containing soybean-derived dietary fiber or soybean-derived protein.

7.  A method for producing a non-alcohol beer-taste beverage having a real extract concentration of 6 w/v% or more, and a ratio of bitterness value (BU) to real extract concentration (w/v%) (bitterness value/real extract) of 2.0 to 3.8, the method comprising:

    a step of yeast fermenting wort having a malt use ratio of 50% or more to obtain a wort fermented liquid; and
    a step of removing alcohol from the fermented wort liquid to reduce the alcohol concentration to less than 1 v/v%.

8.  The method for producing a non-alcohol beer-taste beverage according to claim 7, wherein the wort is a trans-glucosidase-treated wort.

<table>
<tr><td colspan="2"><p align="center">**INTERNATIONAL SEARCH REPORT**</p></td><td>International application No.<br><br>**PCT/JP2022/013206**</td></tr>
</table>

| | |
|---|---|
| **A. CLASSIFICATION OF SUBJECT MATTER** | |

*C12C 11/11*(2019.01)i; *C12C 12/04*(2006.01)i; *C12H 3/00*(2019.01)i; *A23L 2/00*(2006.01)i; *A23L 2/38*(2021.01)i
FI:   C12C12/04; C12H3/00; C12C11/11; A23L2/38 J; A23L2/00 H

According to International Patent Classification (IPC) or to both national classification and IPC

| |
|---|
| **B. FIELDS SEARCHED** |

Minimum documentation searched (classification system followed by classification symbols)

C12C11/11; C12C12/04; C12H3/00; A23L2/00; A23L2/38

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580 (JDreamIII); CAplus/FSTA (STN)

| |
|---|
| **C. DOCUMENTS CONSIDERED TO BE RELEVANT** |

| Category* | Citation of document, with indication, where appropriate, of the relevant passages | Relevant to claim No. |
|---|---|---|
| X | WO 2021/005816 A1 (ASAHI GROUP HOLDINGS LTD.) 14 January 2021 (2021-01-14) claims, paragraphs [0030], [0056], examples | 1-7 |
| Y | | 8 |
| Y | JP 2015-133924 A (SAPPORO BREWERIES LTD.) 27 July 2015 (2015-07-27) claims, paragraphs [0034]-[0038] | 8 |
| Y | JP 2019-110831 A (SAPPORO BREWERIES LTD.) 11 July 2019 (2019-07-11) claims | 8 |
| Y | JP 5-68528 A (SAPPORO BREWERIES LTD.) 23 March 1993 (1993-03-23) claims | 8 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 May 2022** | **31 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2022/013206**

| Patent document cited in search report | | | Publication date (day/month/year) | Patent family member(s) | Publication date (day/month/year) |
|---|---|---|---|---|---|
| WO | 2021/005816 | A1 | 14 January 2021 | (Family: none) | |
| JP | 2015-133924 | A | 27 July 2015 | (Family: none) | |
| JP | 2019-110831 | A | 11 July 2019 | (Family: none) | |
| JP | 5-68528 | A | 23 March 1993 | EP            523333     A1<br>claims | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003250503 A
- JP 2019110831 A
- JP 2015133924 A

**Non-patent literature cited in the description**

- BCOJ Beer Analysis Method. 2004, vol. 8
- BCOJ Beer Analysis Method. 2004, vol. 7
- BCOJ Beer Analysis Method. Beer Brewery Association, 2004, vol. 8